# EUROPÄISCHE PATENTSCHRIFT

(11) **EP 3 326 579 B1**
(45) Veröffentlichungstag und Bekanntmachung des Hinweises auf die Patenterteilung: **03.07.2019**
(21) Anmeldenummer: 16200129.1
(22) Anmeldetag: 23.11.2016
(51) Int. Cl.: A61C 19/00, B65D 1/02, B67D 7/34

(54) **BEHÄLTER ZUR LAGERUNG EINES REINIGUNGS- ODER PFLEGEMEDIUMS MIT KODIERELEMENT ZUR UNTERSCHEIDUNG SOLCHER BEHÄLTER SOWIE VERFAHREN ZUR HERSTELLUNG EINES SOLCHEN BEHÄLTERS**
CONTAINER FOR STORING A CLEANING OR SERVICE MEDIUM WITH CODING ELEMENT FOR THE DISTINCTION OF SUCH CONTAINER AND METHOD FOR MANUFACTURING SUCH A CONTAINER
CONTENEUR POUR STOCKER UN SUPPORT DE NETTOYAGE OU DE SERVICE AVEC UN ÉLÉMENT CODAGE POUR DISTINGUER DE CE CONTENEUR ET PROCÉDÉ DE FABRICATION DE CE CONTENEUR

(43) Veröffentlichungstag der Anmeldung: 30.05.2018
(73) Patentinhaber: W & H Dentalwerk Bürmoos GmbH, 5111 Bürmoos (AT)
(72) Erfinder: GALLUSEDER, Florian, 5121 Tarsdorf (AT); MEBURGER, Jürgen, 5112 Lamprechtshausen (AT); EIBL, Johann, 5230 Mattighofen (AT)
(74) Vertreter: Benda, Ralf

(56) Entgegenhaltungen:
- EP-A1- 2 684 807
- EP-A1- 2 684 807
- WO-A1-2007/073519
- DE-U1- 8 508 940
- DE-U1- 29 902 967

## Beschreibung

Die vorliegende Erfindung betrifft einen Behälter zur Lagerung eines Reinigungs- oder Pflegemediums mit einem mechanischen Kodierelement zur Unterscheidung von Reinigungs- oder Pflegemedien enthaltenden Behältern, ein medizinisches oder dentales Reinigungs- oder Pflegegerät zur Reinigung oder Pflege eines medizinischen oder dentalen Instruments mit einem derartigen Behälter, ein Set derartiger Behälter und ein Verfahren zur Herstellung eines Behälters zur Lagerung eines Reinigungs- oder Pflegemediums mit einem derartigen Kodierelement.

Aus der Patentanmeldung EP 2.684.807 A1 sind Behälter für Reinigungs- oder Pflegemedien mit unterschiedlichen Formen und Volumina bekannt, die in entsprechende Kammern mit Anschlüssen an eine Fördervorrichtung eines Reinigungs- oder Pflegegeräts eingeführt werden können. Die Formen und Größen der Kammern des Reinigungs- oder Pflegegeräts sind an die Formen und Volumina der Behälter angepasst, wodurch die Möglichkeit einer Aufnahme der Behälter in eine unpassende Kammer und eine Verbindung des Behälters mit einem falschen Anschluss der Fördervorrichtung verringert werden soll.

Aus der Patentanmeldung WO 2007/073519 A1 ist ein Behälter bekannt, an dessen Verschluss ein mechanisches Kodierelement vorgesehen ist.

Der vorliegenden Erfindung liegt die Aufgabe zugrunde, Vorrichtungen und Verfahren zu schaffen, mit denen die Aufnahme eines Behälters zur Lagerung eines Reinigungs- oder Pflegemediums in eine unpassende Kammer und/ oder eine Verbindung des Behälters mit einem falschen Anschluss der Fördervorrichtung effektiver oder zusätzlich verringert werden können. Insbesondere soll jeder Behälter verwechslungsfrei in die diesem Behälter zugeordnete Aufnahme einführbar und/ oder mit dem diesem Behälter zugeordneten Anschluss der Fördervorrichtung verbindbar sein.

Diese Aufgabe wird gemäß der vorliegenden Erfindung durch einen Behälter zur Lagerung eines Reinigungs- oder Pflegemediums nach Anspruch 1 und ein Verfahren zur Herstellung eines entsprechenden Behälters zur Lagerung eines Reinigungs- oder Pflegemediums nach Anspruch 14 gelöst. Besonders vorteilhafte Ausführungsformen sind in den jeweiligen Unteransprüchen angeführt.

Erfindungsgemäß ist ein Behälter mit einem (mechanischen) Kodierelement zur Unterscheidung von ein Reinigungs- oder Pflegemedium enthaltenden Behältern vorgesehen, wobei die Behälter zumindest teilweise in eine Aufnahme eines medizinischen oder dentalen Reinigungs- oder Pflegegeräts einführbar sind und zur Förderung des Reinigungs- oder Pflegemediums aus dem Behälter an eine Fördervorrichtung des medizinischen oder dentalen Reinigungs- oder Pflegegeräts anschließbar sind. Das Kodierelement umfasst einen mechanischen Kodierabschnitt und einen Verbindungsabschnitt zum Verbinden des Kodierelements mit einer Außenfläche des Behälters. Der mechanische Kodierabschnitt ist für einen mechanischen Eingriff mit einem mechanischen Gegenelement des Reinigungs- oder Pflegegeräts vorgesehen, derart, dass ein Anschluss des Behälters an die Fördervorrichtung des medizinischen oder dentalen Reinigungs- oder Pflegegeräts und eine Förderung des Reinigungs- oder Pflegemediums aus dem Behälter nur möglich sind, wenn der mechanische Kodierabschnitt mit einem dem mechanischen Kodierabschnitt zugeordneten mechanischen Gegenelement des Reinigungs- oder Pflegegeräts in Eingriff gelangt.

Vorzugsweise bilden der mechanische Kodierabschnitt und das mechanische Gegenelement ein Schlüssel-Schloss-Paar und/ oder funktionieren entsprechend einem Schlüssel-Schloss-Prinzip. Besonders bevorzugt sind der mechanische Kodierabschnitt und das mechanische Gegenelement, zum Beispiel in Form eines Schlüssel-Schloss-Paars, einander eindeutig zugeordnet, so dass der Eingriff zwischen dem Kodierabschnitt und dem Gegenelement möglichst verwechslungsfrei erfolgt.

Im Vergleich mit dem Stand der Technik garantiert das Vorsehen eines Kodierelements in vorteilhafter Weise eine viel exaktere Zuordnung eines Behälters zu einer Aufnahme und verringert somit die Wahrscheinlichkeit eines falschen Anschlusses eines Behälters erheblich. Ein weiterer Vorteil der Erfindung besteht darin, dass sich zur Unterscheidung der Behälter bzw. der darin enthaltenen Medien nur die Kodierelemente voneinander unterscheiden müssen und nicht die Behälter, insbesondere die Behälterformen, wie dies aus dem Stand der Technik bekannt ist. Eine geringere Anzahl von zu produzierenden Behälterformen verringert wiederum den Produktionsaufwand und die Produktionskosten.

Vorzugsweise sind das Kodierelement und das Gegenelement und/ oder der Behälter mit dem Kodierelement und das Reinigungs- oder Pflegegerät mit dem Gegenelement derart ausgebildet, dass ein Ineinandergreifen des Kodierelements und des Gegenelements für einen Anschluss des Behälters an die Fördervorrichtung des medizinischen oder dentalen Reinigungs- oder Pflegegeräts und eine Förderung des Reinigungs- oder Pflegemediums aus dem Behälter unabdingbar ist. Besonders bevorzugt umfasst das Ineinandergreifen einen Kontakt des Kodierelements und des Gegenelements bis zu einem Anschlag, zum Beispiel an Anschlagflächen der beiden Elemente. Insbesondere sind das Kodierelement und das Gegenelement und/ oder der Behälter mit dem Kodierelement und das Reinigungs- oder Pflegegerät mit dem Gegenelement derart ausgebildet, dass ein bloßes Aneinanderlagern (ohne den im Vorstehenden genannten Eingriff) des Kodierelements und des Gegenelements für einen Anschluss des Behälters an die Fördervorrichtung des medizinischen oder dentalen Reinigungs- oder Pflegegeräts, der eine Förderung des Reinigungs- oder Pflegemediums aus dem Behälter zulässt, nicht ausreicht. Insbesondere ermöglicht das Ineinandergreifen des Kodierelements und des Gegenelements eine Öffnung des Behälters, zum Beispiel durch das Eindringen oder Durchdringen eines Abschnitts der Fördervorrichtung in oder durch einen Verschluss des Behälters.

Das Ineinandergreifen umfasst zum Beispiel zumindest eine der folgenden Möglichkeiten: das Einführen zumindest eines Abschnitts des Kodierelements oder des Gegenelements in zumindest einen Abschnitt des anderen Elements; das Einführen des gesamten Kodierelements oder Gegenelements in das andere Element; das Umschließen zumindest eines Abschnitts des Kodierelements oder des Gegenelements durch zumindest einen Abschnitt des anderen Elements; das Umschließen des gesamten Kodierelements oder Gegenelements durch das andere Element; einen physischen Kontakt zwischen zumindest einem Abschnitt des Kodierelements und des Gegenelements, insbesondere an oder durch zumindest einen Anschlag; das Bewegen zumindest eines Abschnitts des Kodierelements relativ zu zumindest einem Abschnitt des Gegenelements, insbesondere ein aneinander Gleiten.

Vorzugsweise ist das mechanische Kodierelement und/ oder das mechanische Gegenelement zumindest teilweise aus Kunststoff hergestellt, insbesondere durch ein Spritzgussverfahren. Selbstverständlich ist es auch möglich, dass zumindest Teile des mechanischen Kodierelements und/ oder des mechanischen Gegenelements aus einem anderen Material, zum Beispiel aus Metall, gefertigt sind.

Vorzugsweise umfasst der mechanische Kodierabschnitt ein geometrisches Formelement, insbesondere ein sich von dem Verbindungsabschnitt und/ oder von zumindest einem Abschnitt der Außenfläche des Behälters erstreckendes geometrisches Formelement. Vorzugsweise umfasst der mechanische Kodierabschnitt oder das geometrische Formelement zumindest eines der folgenden Elemente: einen geometrischen Formkörper; einen Vorsprung; einen Fortsatz; einen Stift; eine Öffnung; eine Ausnehmung; einen Kanal; einen Rücksprung; eine Aussparung; eine Kombination von zwei oder mehr der vorstehenden Elemente. Vorzugsweise ist/sind der geometrische Formkörper, der Vorsprung, der Fortsatz und/ oder der Stift zur Aufnahme oder zum Eingriff in dem Gegenelement vorgesehen. Vorzugsweise ist/sind die Öffnung, die Ausnehmung, der Kanal, der Rücksprung und/ oder die Aussparung zur Aufnahme oder zum Eingriff zumindest eines Abschnitts des Gegenelements vorgesehen.

Besonders bevorzugt umfasst der mechanische Kodierabschnitt einen geometrischen Formkörper mit zumindest einem Kanal zur Aufnahme oder zum Eingriff zumindest eines Abschnitts des Gegenelements, zum Beispiel eines Stiftes. Besonders bevorzugt weisen mechanische Kodierabschnitte unterschiedlicher Kodierelemente gleiche geometrische Formkörper auf, unterscheiden sich jedoch in der Anzahl der Kanäle zur Aufnahme oder zum Eingriff zumindest eines Abschnitts des Gegenelements und/ oder in der Position des zumindest einen Kanals zur Aufnahme oder zum Eingriff zumindest eines Abschnitts des Gegenelements. Besonders bevorzugt umfasst der mechanische Kodierabschnitt einen leistenförmigen, vorzugsweise gebogenen, geometrischen Formkörper, insbesondere mit zumindest einem Kanal zur Aufnahme oder zum Eingriff zumindest eines Abschnitts des Gegenelements.

Zusätzlich oder alternativ ist es auch möglich, dass ein mechanischer Kodierabschnitt oder unterschiedliche mechanische Kodierabschnitt unterschiedlich geformte geometrische Formelemente aufweisen, zum Beispiel geometrische Formelemente mit unterschiedlichen Querschnitten.

Aus diesen vorstehenden, nur beispielhaften Aufzählungen von möglichen Ausbildungen des mechanischen Kodierabschnitts ist klar erkennbar, dass damit auf einfache Weise eine Vielzahl von Behältern mit unterschiedlichen Reinigungs- oder Pflegemedien kodiert und voneinander unterscheidbar sind.

Vorzugsweise sind der mechanische Kodierabschnitt und der Verbindungsabschnitt gewinkelt zueinander angeordnet, insbesondere in einem Winkel von etwa 90°. Vorzugsweise umfasst der Verbindungsabschnitt eine Form, welche zumindest einem Abschnitt des Behälters oder einem Abschnitt der Oberfläche des Behälters folgt. Vorzugsweise ist der Verbindungsabschnitt flächig, plattenförmig und/ oder gebogen ausgebildet.

Vorzugsweise ist der Verbindungsabschnitt ausgebildet, das Kodierelement und/ oder den mechanischen Kodierabschnitt unlösbar und/ oder verdrehsicher mit einer Außenfläche des Behälters zu verbinden, so dass eine zerstörungsfreie Entfernung des Kodierelements von dem Behälter unmöglich ist. Vorzugsweise ist an dem Behälter ein weiterer Verbindungsabschnitt vorgesehen, der mit dem Verbindungsabschnitt des Kodierelements verbindbar ist, zum Beispiel durch einen wechselseitigen Eingriff, um eine unlösbare und/ oder verdrehsichere Verbindung des mechanischen Kodierelements mit dem Behälter zu bilden. Besonders bevorzugt umfasst der Verbindungsabschnitt des Kodierelements und/ oder des Behälters dazu zumindest eines der folgenden Elemente: zumindest ein Formschlusselement; zumindest Rastelement, zum Beispiel einen Einrastnocken und/ oder bewegliche Rastflügel; zumindest ein Schnappelement; einen Dreh- oder Schnappring; zumindest einen Rücksprung zur Aufnahme eines Formschluss- oder Rastelements.

Der Verbindungsabschnitt ist ausgebildet, zum Verbinden des Kodierelements mit einer Außenfläche des Behälters zumindest den Behälterhals des Behälters zu umgreifen. Der Verbindungsabschnitt weist dazu eine Öffnung auf, in welcher der umgriffene Abschnitt des Behälters aufnehmbar ist. Der Verbindungsabschnitt ist als Manschette ausgebildet, die den Behälterhals des Behälters umgreift oder umgibt. Bevorzugt ist an der Öffnung zumindest eines der im vorstehenden Absatz genannten Elemente zur unlösbaren und/ oder verdrehsicheren Verbindung des Kodierelements mit einer Außenfläche des Behälters angeordnet. Bevorzugt ist an dem Behälterauslass oder Behälterhals oder daran anschließend zumindest eines der im vorstehenden Absatz genannten Elemente zur unlösbaren und/ oder verdrehsicheren Verbindung des Kodierelements mit einer mit einer Außenfläche des Behälters angeordnet.

Der Behälter zur Lagerung eines Reinigungs- oder Pflegemediums ist vorgesehen, zumindest teilweise in eine Aufnahme eines medizinischen oder dentalen Reinigungs- oder Pflegegeräts einführbar und zur Förderung des Reinigungs- oder Pflegemediums aus dem Behälter an eine Fördervorrichtung des medizinischen oder dentalen Reinigungs- oder Pflegegeräts anschließbar zu sein. Der Behälter weist des Weiteren ein im Vorstehenden beschriebenes Kodierelement auf. Der Behälter ist vorzugsweise aus Kunststoff hergestellt.

Der Behälter umfasst einen Behälterboden, eine Behälteroberseite, an der ein Behälterauslass zur Abgabe eines Reinigungs- oder Pflegemediums vorgesehen ist, und einen Behältermantel, der den Behälterboden und die Behälteroberseite verbindet. Der Behälterboden ist insbesondere als ebene Fläche oder Standfläche ausgebildet. Die Behälteroberseite ist vorzugsweise gegenüber dem Behälterboden angeordnet. Der Behälterauslass umfasst zum Beispiel eine Auslassöffnung, einen Behälterhals und/ oder einen, vorzugsweise zylindrischen, Stutzen. Der Behälterauslass erstreckt sich vorzugsweise von der Behälteroberseite. Der Durchmesser des Behälterauslass ist vorzugsweise geringer als die Breite der Behälteroberseite, so dass insbesondere der Behälterauslass von der Behälteroberseite umgeben ist. Der Behältermantel kann zylindrisch geformt sein oder mehrere gewinkelt zueinander angeordnete Mantelflächen aufweisen.

Gemäß einem bevorzugten Ausführungsbeispiel, das auch einen eigenständigen erfinderischen Aspekt bildet, ist der Behältermantel asymmetrisch und/ oder der Behältermantel bzw. die Außenform des Behälters um die Längsachse ist nicht rotationssymmetrisch geformt. Besonders bevorzugt weist der Behältermantel auf: eine erste ebene Mantelfläche, eine zweite ebene Mantelfläche, die gewinkelt zur ersten ebenen Mantelfläche angeordnet und mit dieser verbunden ist, und eine gebogene Mantelfläche, die mit der ersten ebenen Mantelfläche und der zweiten ebenen Mantelfläche verbunden ist.

Ein Behälter mit einem asymmetrischen oder nicht rotationssymmetrischen Behältermantel bildet in vorteilhafter Weise, insbesondere zusätzlich zu dem Kodierelement, eine (zusätzliche) Unterscheidungsmöglichkeit zwischen verschiedenen Behältern und verringert somit (zusätzlich) die Möglichkeit, einen Behälters in eine unpassende Aufnahme eines Reinigungs- oder Pflegegeräts einzuführen und eine Verbindung des Behälters mit einem falschen Anschluss der Fördervorrichtung herzustellen. Dies ist insbesondere der Fall, wenn die Aufnahme(n) des Reinigungs- oder Pflegegeräts eine zu dem asymmetrisch oder nicht rotationssymmetrisch geformten Behältermantel korrespondierende Form haben. Insbesondere ist ein asymmetrischer oder nicht rotationssymmetrischer Behältermantel bei einem Behälter mit einem im Vorstehenden beschriebenen Kodierelement von Vorteil, da ein derartiger asymmetrischer oder nicht rotationssymmetrischer Behältermantel, insbesondere wiederum in Verbindung mit einer Aufnahme des Reinigungs- oder Pflegegeräts mit korrespondierender asymmetrischer oder nicht rotationssymmetrischer Form, nur eine einzige Möglichkeit zulässt, den Behälter in die Aufnahme einzuführen, wodurch gewährleistet ist, dass das Kodierelement und das Gegenelement aufeinander zu bewegt werden bzw. aufeinander treffen.

Der Behälter, insbesondere der Behälterauslass, weist einen Verschluss auf, der insbesondere beim oder durch das Anschließen des Behälters an die Fördervorrichtung zur Förderung des Reinigungs- oder Pflegemediums aus dem Behälter und/ oder beim oder durch das Einbringen des Behälters in ein Reinigungs- oder Pflegegerät öffenbar ist. Vorzugsweise ist der Verschluss durch die Fördervorrichtung oder ein mit der Fördervorrichtung verbundenes Bauteil, zum Beispiel durch ein Röhrchen oder eine Leitung oder eine Kanüle, öffenbar oder durchsetzbar. Bevorzugt umfasst der Verschluss eine Membran, besonders bevorzugt zusätzlich eine Metallmanschette, welche die Membran zumindest teilweise bedeckt. Vorzugsweise sind das Kodierelement und das Gegenelement derart ausgebildet und/ oder angeordnet, dass nur, wenn das Kodierelement und das Gegenelement ineinandergreifen, insbesondere wenn sie einander an einem Anschlag kontaktieren, der Verschluss des Behälters öffenbar ist.

Wie im Vorstehenden bereits beschrieben ist das Kodierelement vorzugsweise mittels eines Verbindungsabschnitts des Kodierelements und/ oder eines Verbindungsabschnitts des Behälters unlösbar und/ oder verdrehsicher mit einer Außenfläche des Behälters verbindbar, so dass eine zerstörungsfreie Entfernung des Kodierelements von dem Behälter unmöglich ist. Besonders bevorzugt umgreift der Verbindungsabschnitt des Kodierelements den Behälterhals oder Behälterauslass des Behälters.

Vorzugsweise weist der Behälter eine Längsachse auf, entlang welcher der Behälter bewegbar und in eine Aufnahme eines medizinischen oder dentalen Reinigungs- oder Pflegegeräts einführbar ist und insbesondere der mechanische Kodierabschnitt des Kodierelements mit einem mechanischen Gegenelement des Reinigungs- oder Pflegegeräts in Eingriff bringbar ist. Vorzugsweise erstreckt sich die Längsachse des Behälters vom Behälterboden zur Behälteroberseite oder zum oder durch den Behälterauslass. Damit ist es in vorteilhafter Weise möglich, mit einer Bewegung des Behälters in eine einzige Richtung, d.h. entlang der Längsachse, den Behälter in eine Aufnahme einzuführen, den mechanischen Kodierabschnitt mit dem mechanischen Gegenelement in Eingriff zu bringen und den Verschluss der Behälters zu öffnen.

Vorzugsweise erstreckt/erstrecken sich der Kodierabschnitt des mechanischen Kodierelements und/ oder eine Längsachse des Kodierabschnitts parallel zu der Längsachse des Behälters. Der mechanische Kodierabschnitt erstreckt sich parallel zu dem Behälterhals oder Behälterauslass, insbesondere einem Auslassstutzen, des Behälters. Vorzugsweise erstrecken sich der Behälterhals oder der Behälterauslass und der mechanische Kodierabschnitt in dieselbe Richtung. Vorzugsweise erstreckt sich der mechanische Kodierabschnitt nicht über den Behälterauslass hinaus. Vorzugsweise erstrecken sich der Behälterhals oder der Behälterauslass und der mechanische Kodierabschnitt von einer gemeinsamen oder einzigen Teilfläche der Außenfläche des Behälters, insbesondere von einer Teilfläche, welche die Mantelfläche des Behälters mit dem Behälterhals oder dem Behälterauslass verbindet und/ oder welche den Behälterhals oder den Behälterauslass umgibt.

Vorzugsweise umfasst die Aufnahme des medizinischen oder dentalen Reinigungs- oder Pflegegeräts eine Längsachse, entlang welcher der Behälter bewegbar und in die Aufnahme einführbar ist und insbesondere der mechanische Kodierabschnitt des Kodierelements mit einem mechanischen Gegenelement des Reinigungs- oder Pflegegeräts in Eingriff bringbar ist. Bevorzugt sind die Aufnahme und der Behälter derart ausgebildet und/ oder relativ zueinander anordenbar, dass die Behälter-Längsachse und die Längsachse der Aufnahme einander überlagern oder eine gemeinsame Translationsachse bilden, entlang welcher der Behälter bewegbar und in die Aufnahme einführbar ist und insbesondere der mechanische Kodierabschnitt des Kodierelements mit einem mechanischen Gegenelement des Reinigungs- oder Pflegegeräts in Eingriff bringbar ist.

Vorzugsweise ist an dem Behältermantel und/ oder an dem Behälterboden zumindest eine Griffmulde vorgesehen, welche die Handhabung, insbesondere das Einführen, des Behälters in eine Aufnahme des Reinigungs- oder Pflegegeräts und/ oder das in Eingriff Bringen des Kodierabschnitts mit dem Gegenelement, erleichtert. Vorzugsweise ist die zumindest eine Griffmulde an der ersten ebenen Mantelfläche oder an der zweiten ebenen Mantelfläche oder an der gebogenen Mantelfläche angeordnet.

Gemäß einem Ausführungsbeispiel ist ein Set von Behältern zur Lagerung eines Reinigungs- oder Pflegemediums vorgesehen, wobei jeder der Behälter des Sets zumindest teilweise in eine Aufnahme eines medizinischen oder dentalen Reinigungs- oder Pflegegeräts einführbar ist und zur Förderung des Reinigungs- oder Pflegemediums aus dem Behälter an eine Fördervorrichtung des medizinischen oder dentalen Reinigungs- oder Pflegegeräts anschließbar ist, wobei das Set von Behältern zumindest einen im Vorstehenden beschriebenen Behälter umfasst, insbesondere einen Behälter mit einem mechanischen Kodierelement, vorzugsweise mit einem im Vorstehenden beschriebenen mechanischen Kodierelement, und/ oder mit einem Behältermantel oder Außenform, die asymmetrisch und/ oder um die Längsachse nicht rotationssymmetrisch geformt sind.

Gemäß einem anderen Ausführungsbeispiel ist ein Set von Behältern zur Lagerung eines Reinigungs- oder Pflegemediums vorgesehen, wobei jeder der Behälter des Sets zumindest teilweise in eine Aufnahme eines medizinischen oder dentalen Reinigungs- oder Pflegegeräts einführbar ist und zur Förderung des Reinigungs- oder Pflegemediums aus dem Behälter an eine Fördervorrichtung des medizinischen oder dentalen Reinigungs- oder Pflegegeräts anschließbar ist, wobei das Set von Behältern zumindest zwei Behälter aufweist, deren Behältermäntel oder Außenformen jeweils asymmetrisch und/ oder um die Längsachse nicht rotationssymmetrisch geformt sind, so wie dies im Vorstehenden beschrieben ist. Insbesondere weisen diese zumindest zwei Behälter (in Bezug aufeinander) spiegelverkehrte asymmetrische oder nicht rotationssymmetrische Behältermäntel oder Außenformen auf. Vorzugsweise enthalten diese zumindest zwei Behälter des Behältersets unterschiedliche Medien, zum Beispiel enthält einer der Behälter ein Reinigungsmedium, zum Beispiel eine Reinigungs- oder Desinfektionsflüssigkeit, und ein anderer Behälter ein Pflegemedium, zum Beispiel ein Schmiermittel. Vorzugsweise weist zumindest einer der zumindest zwei Behälter des Behältersets ein im Vorstehenden beschriebenes mechanisches Kodierelement auf. Vorzugsweise umfasst zumindest einer der zumindest zwei Behälter des Behältersets einen im Vorstehenden beschriebenen Behälter mit einem mechanischen Kodierelement auf.

In vorteilhafter Weise sind die zumindest zwei Behälter des Sets, deren Behältermäntel oder Außenformen jeweils asymmetrisch und/ oder um die Längsachse nicht rotationssymmetrisch geformt sind, einfach voneinander unterscheidbar. Insbesondere wenn die Aufnahmen des Reinigungs- oder Pflegegeräts für diese zumindest zwei Behälter den Behältern entsprechende Formen aufweisen, wird ein falscher Anschluss dieser zumindest zwei Behälter an die Fördervorrichtung des Reinigungs- oder Pflegegeräts verhindert. Die Möglichkeit eines derartigen falschen Anschlusses wird durch das Vorsehen eines mechanischen Kodierelements noch zusätzlich verringert, wobei, wie im Vorstehenden bereits beschrieben, die Asymmetrie der zumindest zwei Behälter des Behältersets und vorzugsweise auch der Aufnahmen des Reinigungs- oder Pflegegeräts für diese zumindest zwei Behälter eine zusätzliche Sicherheit garantiert, dass die zumindest zwei Behälter derart in ihre jeweiligen Aufnahmen eingeführt werden, dass ein mechanisches Kodierelement eines Behälters und ein Gegenelement der Aufnahme in Eingriff bringbar sind.

Gemäß einem weiteren Ausführungsbeispiel ist ein medizinisches oder dentales Reinigungs- oder Pflegegerät nach Anspruch 11 zur Reinigung oder Pflege eines medizinischen oder dentalen Instruments vorgesehen, das umfasst: eine Fördervorrichtung zur Förderung eines Reinigungs- oder Pflegemediums aus einem Behälter, eine mit der Fördervorrichtung verbundene Abgabevorrichtung zur Abgabe eines Reinigungs- oder Pflegemediums auf und/ oder in das Instrument, zumindest eine Aufnahme für zumindest einen Abschnitt eines Behälters zur Lagerung eines Reinigungs- oder Pflegemediums, wobei der Behälter ein mechanisches Kodierelement mit einem mechanischen Kodierabschnitt aufweist, und einen im Vorstehenden beschriebenen Behälter. In oder an der Aufnahme ist ein mechanisches Gegenelement angeordnet, das für einen mechanischen Eingriff mit einem mechanischen Kodierabschnitt des Behälters zur Lagerung eines Reinigungs- oder Pflegemedium vorgesehen ist, derart, dass ein Anschluss des Behälters an die Fördervorrichtung des medizinischen oder dentalen Reinigungs- oder Pflegegeräts und insbesondere eine Förderung des Reinigungs- oder Pflegemediums aus dem Behälter nur möglich sind, wenn das mechanische Gegenelement mit einem dem mechanischen Gegenelement zugeordneten mechanischen Kodierabschnitt des Reinigungs- oder Pflegegeräts in Eingriff gelangt. Vorzugsweise ist eine medizinische oder dentale Reinigungs- oder Pflegeeinheit vorgesehen, die das medizinische oder dentale Reinigungs- oder Pflegegerät und zumindest einen Behälter zur Lagerung eines Reinigungs- oder Pflegemediums aufweist, wobei der Behälter bevorzugt ein mechanisches Kodierelement mit einem mechanischen Kodierabschnitt aufweist und insbesondere einen im Vorstehenden beschriebenen Behälter mit einem im Vorstehenden beschriebenen mechanischen Kodierelement umfasst.

Vorzugsweise umfasst die Fördervorrichtung des Reinigungs- oder Pflegegeräts zumindest eines der folgenden Bauteile: eine Pumpe, einen Anschluss an eine Medienquelle, insbesondere an einen Behälter, einen Anschluss an eine Druckluftleitung, ein Ventil, eine Förderleitung zur Förderung des Reinigungs- oder Pflegemediums, insbesondere von einer Medienquelle, zum Beispiel einem Behälter zur Lagerung eines Reinigungs- oder Pflegemediums, zu einem zu reinigendem oder zu pflegendem Instrument, einen Anschluss an ein zu reinigendes oder zu pflegendes Instrument. Vorzugsweise ist der Anschluss an einen Behälter als Teil der Förderleitung ausgebildet und/ oder mit der Förderleitung verbunden. Vorzugsweise umfasst jede Aufnahme für zumindest einen Abschnitt eines Behälters einen eigenen Anschluss an einen Behälter. Vorzugsweise ragt der Anschluss an einen Behälter in eine Aufnahme, insbesondere derart, dass, (nur) wenn das Kodierelement und das Gegenelement ineinandergreifen, insbesondere wenn sie einander an einem Anschlag kontaktieren, der Verschluss des Behälters öffenbar ist.

Vorzugsweise ist die Abgabevorrichtung zur Abgabe eines Reinigungs- oder Pflegemediums ausgebildet, das Reinigungs- oder Pflegemedium an die Außenseite und/ oder an die Innenseite des zu reinigenden oder zu pflegenden Instruments abzugeben.

Vorzugsweise umfasst die zumindest eine Aufnahme eine Bodenfläche mit zumindest einem Abschnitt der Förderleitung und/ oder einem Anschluss an einen Behälter, eine Aufnahmeöffnung für den Behälter und eine Wand oder Seitenwand, welche die Bodenfläche mit der Aufnahmeöffnung verbindet. Vorzugsweise sind die Bodenfläche und die Aufnahmeöffnung einander gegenüber liegend angeordnet. Vorzugsweise sind der Anschluss an einen Behälter und das Gegenelement axial (in Bezug auf die Längsachse der Aufnahme) versetzt angeordnet.

Vorzugsweise umfasst die Wand oder Seitenwand der zumindest einen Aufnahme mehrere ebene und/ oder gebogene Wandflächen, die gewinkelt zueinander angeordnet sind. Vorzugsweise ist die Wand asymmetrisch geformt, insbesondere in Bezug auf eine sich von der Bodenfläche in Richtung der Aufnahmeöffnung für den Behälter erstreckende Längsachse der Aufnahme. Vorzugsweise umfasst die asymmetrisch geformte Wand oder Seitenwand: eine erste ebene Wandfläche, eine zweite ebene Wandfläche, die gewinkelt zur ersten ebenen Wandfläche angeordnet und mit dieser verbunden ist, und eine gebogene Wandfläche, die mit der ersten ebenen Wandfläche und der zweiten ebenen Wandfläche verbunden ist. Vorzugsweise umfassen die Wand der Aufnahme und die Mantelfläche eines darin aufnehmbaren Behälters, insbesondere eines im vorstehenden beschriebenen Behälters, korrespondierende oder gleiche Formen.

Vorzugsweise umfasst das medizinische oder dentale Reinigungs- oder Pflegegerät mehrere, insbesondere zwei, Aufnahmen. Vorzugsweise umfassen die zwei Aufnahmen jeweils eine asymmetrisch geformte Wand oder Seitenwand. Besonders bevorzugt sind die Aufnahmen, insbesondere die asymmetrisch geformten Wände der beiden Aufnahmen, (relativ zueinander) spiegelverkehrt ausgebildet.

Vorzugsweise umfasst das in der zumindest einen Aufnahme vorgesehene mechanische Gegenelement ein sich in Richtung der Aufnahmeöffnung der Aufnahme erstreckendes geometrisches Formelement. Vorzugsweise umfasst das mechanische Gegenelement oder das geometrische Formelement zumindest eines der folgenden Elemente: einen geometrischen Formkörper; einen Vorsprung; einen Fortsatz; einen Stift; eine Öffnung; eine Ausnehmung; einen Kanal; einen Rücksprung; eine Aussparung; eine Kombination von zwei oder mehr der vorstehenden Elemente. Vorzugsweise ist/sind der geometrische Formkörper, der Vorsprung, der Fortsatz und/ oder der Stift zur Aufnahme oder zum Eingriff in dem mechanischen Kodierabschnitt vorgesehen. Vorzugsweise ist/sind die Öffnung, die Ausnehmung, der Kanal, der Rücksprung und/ oder die Aussparung zur Aufnahme oder zum Eingriff zumindest eines Abschnitts des mechanischen Kodierabschnitts vorgesehen.

Besonders bevorzugt weisen unterschiedliche mechanische Gegenelemente, die insbesondere in unterschiedlichen Aufnahmen eines Reinigungs- oder Pflegegeräts angeordnet sind, gleiche geometrische Formelemente auf, zum Beispiel zylindrische Stifte zur Aufnahme oder zum Eingriff in dem mechanischen Kodierabschnitt, unterscheiden sich jedoch in der Anzahl der geometrischen Formelemente und/ oder in der Position der geometrischen Formelemente. Zusätzlich oder alternativ ist es auch möglich, dass ein mechanisches Gegenelement oder unterschiedliche mechanische Gegenelemente unterschiedlich geformte geometrische Formelemente aufweisen, insbesondere geometrische Formelemente oder Formkörper mit unterschiedlichen Querschnitten.

Bevorzugt weist ein medizinisches oder dentales Reinigungs- oder Pflegegerät mehrere, zum Beispiel zwei, Aufnahmen für Behälter auf, wobei in jeder der mehreren Aufnahmen ein mechanisches Gegenelement angeordnet ist, das für einen mechanischen Eingriff mit einem mechanischen Kodierabschnitt des Behälters zur Lagerung eines Reinigungs- oder Pflegemedium vorgesehen ist, wobei die mechanischen Gegenelemente in den mehreren Aufnahmen sich in der Anzahl der geometrischen Formkörper und/ oder in der Position der geometrischen Formkörper und/ oder in der Form der geometrischen Formkörper unterscheiden.

Vorzugsweise weist der Behälter oder der Behältermantel einen sich in Richtung des Auslasses verjüngenden Querschnitt auf. Besonders bevorzugt weist die zumindest eine Aufnahme, insbesondere die Wand der Aufnahme, einen entsprechenden, sich in Richtung des Anschlusses zur Verbindung mit dem Behälter verjüngenden Querschnitt auf.

Gemäß Anspruch 14 ist ein Verfahren zur Herstellung eines Behälters nach einem der Ansprüche 1 bis 9 vorgesehen, das folgende Schritte aufweist:
- zur Verfügung stellen eines Behälters,
- zur Verfügung stellen eines separaten Kodierelements mit einem mechanischen Kodierabschnitt und einem als Manschette ausgebildeten Verbindungsabschnitt zum Verbinden des separaten Kodierelements mit einer Außenfläche des Behälters, wobei der mechanische Kodierabschnitt für einen mechanischen Eingriff mit einem mechanischen Gegenelement eines Reinigungs- oder Pflegegeräts vorgesehen ist, derart, dass ein Anschluss des Behälters an eine Fördervorrichtung eines medizinischen oder dentalen Reinigungs- oder Pflegegeräts und eine Förderung des Reinigungs- oder Pflegemediums aus dem Behälter nur möglich sind, wenn der mechanische Kodierabschnitt mit einem dem mechanischen Kodierabschnitt zugeordneten mechanischen Gegenelement des Reinigungs- oder Pflegegeräts in Eingriff gelangt,
- Verbinden des separaten Kodierelements mit dem Behälter durch den Verbindungsabschnitt, so dass der als Manschette ausgebildete Verbindungsabschnitt den Behälterhals umgreift oder umgibt und der Behälterhals in einer Öffnung der Manschette derart aufgenommen ist, dass der Behälterhals den Verbindungsabschnitt durchdringt, so dass sich der mechanische Kodierabschnitt parallel zu dem Behälterhals erstreckt, und- Befüllen des Behälters mit einem Reinigungs- oder Pflegemedium für ein medizinisches oder dentales Reinigungs- oder Pflegegerät vor oder nach dem Verbinden des Kodierelements mit dem Behälter.

Das Verbinden des Kodierelements mit dem Behälter erfolgt insbesondere unlösbar und/ oder verdrehsicher, vorzugsweise mit einer Außenfläche des Behälters, so dass eine zerstörungsfreie Entfernung des Kodierelements von dem Behälter unmöglich ist, so wie dies im Vorstehenden beschrieben ist.

Gemäß einem Ausführungsbeispiel ist ein Verfahren zum Anschluss eines, insbesondere im Vorstehenden beschriebenen, Behälters zur Lagerung eines Reinigungs- oder Pflegemediums an ein, insbesondere im Vorstehenden beschriebenes, medizinische oder dentales Reinigungs- oder Pflegegerät, vorgesehen, bei dem der Behälter entlang seiner Längsachse (und/ oder entlang einer Längsachse der Aufnahme des medizinischen oder dentalen Reinigungs- oder Pflegegeräts) bewegt wird, wodurch der Behälter in eine Aufnahme des medizinischen oder dentalen Reinigungs- oder Pflegegeräts eingeführt wird und wodurch (gleichzeitig oder während zumindest eines Zeitabschnitts des Einführens des Behälters in die Aufnahme) der mechanische Kodierabschnitt des Kodierelements mit einem mechanischen Gegenelement des Reinigungs- oder Pflegegeräts in Eingriff gebracht wird. Vorzugsweise wird durch das in Eingriff Bringen des mechanischen Kodierabschnitts und des mechanischen Gegenelements ein Verschluss des Behälters geöffnet und/ oder ist der Verschluss des Behälters nur öffenbar, wenn der mechanische Kodierabschnitt und das mechanische Gegenelement in Eingriff gebracht werden, so wie dies im Vorstehenden beschrieben ist. Das Öffnen des Behälters umfasst insbesondere das Durchstechen eines Verschlusses des Behälters, insbesondere einer Membran, vorzugsweise durch die Fördervorrichtung des Reinigungs- oder Pflegegeräts, durch die Förderleitung oder durch den in der Aufnahme vorgesehenen Anschluss zur Verbindung mit dem Behälter.

Bevorzugt gilt für alle im Vorstehenden beschriebenen Ausführungsbeispiele, dass zumindest ein Teil des mechanischen Kodierelements, insbesondere zumindest ein Abschnitt des mechanischen Kodierabschnitts, oder zumindest ein Teil des mechanischen Gegenelements als Positivform und zumindest ein Teil des anderen Elements, d.h. des mechanischen Kodierelements, insbesondere des mechanischen Kodierabschnitts, oder des mechanischen Gegenelements, als Negativform ausgebildet ist. Beim in den Eingriff Gelangen des mechanischen Kodierelements und des mechanischen Gegenelements greift insbesondere die Positivform in die Negativform ein. Zum Beispiel umfasst das Gegenelement zumindest eine Positivform in Form eines Stifts und das mechanischen Kodierelement eine Negativform in Form einer Aufnahme oder eines Kanals.

Bevorzugt gilt für alle im Vorstehenden beschriebenen Ausführungsbeispiele, dass die Aufnahme für einen Behälter des medizinischen oder dentalen Reinigungs- oder Pflegegeräts als Negativform und der in die Aufnahme einzuführende Behälter als Positivform ausgebildet sind. Insbesondere weisen die Negativform / Aufnahme und die Positivform, d.h. der dieser Aufnahme zugeordnete Behälter, korrespondierende Außenformen, insbesondere korrespondierende Mantel- und Wandflächen, besonders bevorzugt korrespondierende asymmetrische oder nicht rotationssymmetrische Mantel- und Wandflächen auf.

Die Erfindung wird nachfolgend anhand bevorzugter Ausführungsbeispiele und Bezug nehmend auf die beigefügten Zeichnungen erläutert:
Figur 1 zeigt einen Behälter zur Lagerung eines Reinigungs- oder Pflegemediums mit einem mechanischen Kodierelement;
Figur 2 zeigt eine Schnittdarstellung durch ein mechanisches Kodierelement;
Figur 3 zeigt einen Behälter zur Lagerung eines Reinigungs- oder Pflegemediums und den am Behälterauslass vorgesehenen Verbindungsabschnitt zur Verbindung mit einem mechanischen Kodierelement;
Figur 4 zeigt den in der Figur 3 mit "B" gekennzeichneten Ausschnitt mit dem Behälterauslass und dem Verbindungsabschnitt;
Figur 5 zeigt einen Behälter zur Lagerung eines Reinigungs- oder Pflegemediums mit einem alternativen mechanischen Kodierelement;
Figur 6 zeigt ein medizinisches oder dentales Reinigungs- oder Pflegegerät zur Reinigung oder Pflege eines medizinischen oder dentalen Instruments mit zwei Aufnahmen für zumindest einen Abschnitt eines Behälters zur Lagerung eines Reinigungs- oder Pflegemediums;
Figur 7 zeigt den in der Figur 6 mit "A" gekennzeichneten Ausschnitt einer Aufnahme für zumindest einen Abschnitt eines Behälters mit einem mechanischen Gegenelement;
Figur 8 zeigt einen Behälter zur Lagerung eines Reinigungs- oder Pflegemediums mit einem alternativen mechanischen Kodierelement, der in eine Aufnahme mit einem alternativen Gegenelement eingeführt wird;
Figur 9 zeigt den mechanischen Eingriff eines mechanischen Gegenelements in einen mechanischen Kodierabschnitt eines Kodierelements;
Figur 10 zeigt in Aufsicht zwei Behälter zur Lagerung eines Reinigungs- oder Pflegemediums, die insbesondere ein Behälter-Set bilden, mit jeweils einem mechanischen Kodierelement, wobei die Behältermäntel beider Behälter asymmetrisch geformt und relativ zueinander spiegelverkehrt sind.

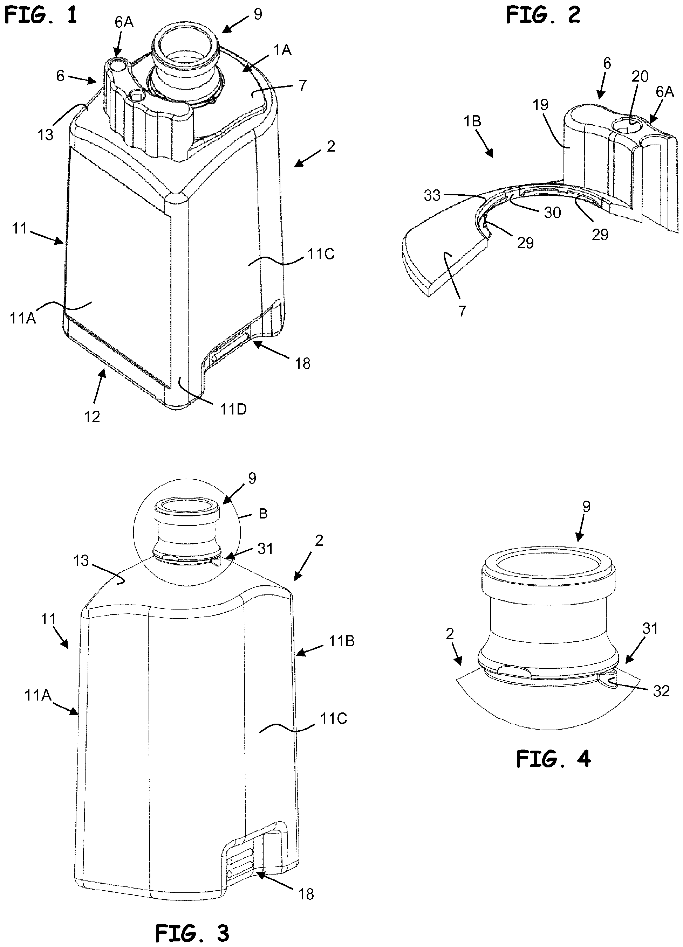

Die Figuren 1, 5 und 10 zeigen Behälter 2 zur Lagerung eines Reinigungs- oder Pflegemediums mit einem mechanischen Kodierelement 1A, 1C, 1D zur Unterscheidung von ein Reinigungs- oder Pflegemedium enthaltenden Behältern 2. Wie im Weiteren noch beschrieben, weisen die beiden Kodierelemente 1A, 1C, 1D unterschiedliche Kodierabschnitte 6 auf, so dass die damit verbundenen Behälter 2, die insbesondere unterschiedliche Medien enthalten, unterscheidbar sind.

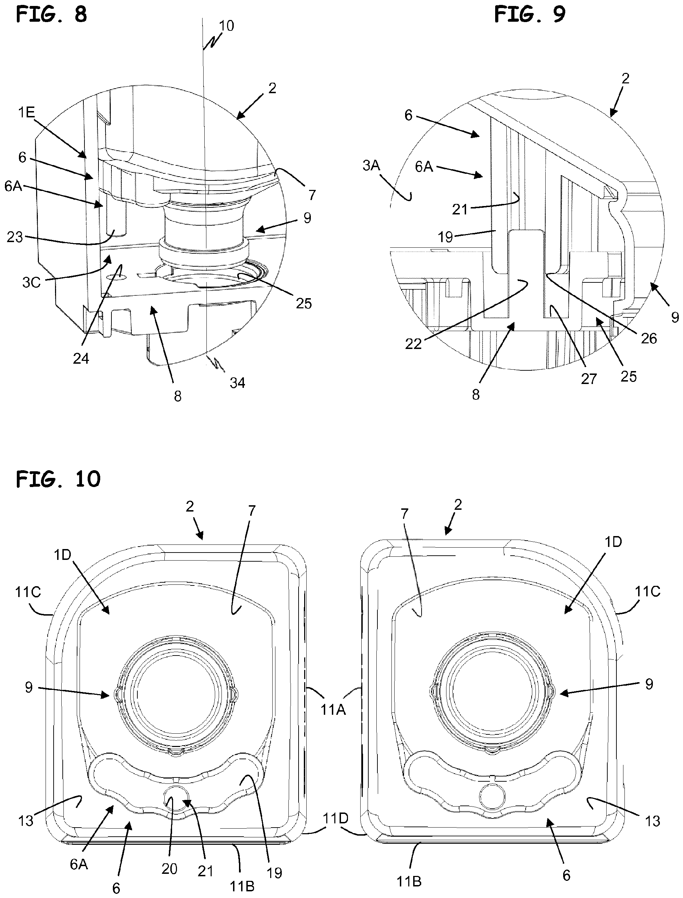

Die Behälter 2 umfassen einen Behälterboden 12, eine Behälteroberseite 13, an der ein Behälterauslass 9 zur Abgabe eines Reinigungs- oder Pflegemediums vorgesehen ist, und einen Behältermantel 11, der den Behälterboden 12 und die Behälteroberseite 13 verbindet. In Verbindung mit Figur 3 und insbesondere aus der Figur 10 ist zu erkennen, dass die Behälter 2, insbesondere die Behältermäntel 11, asymmetrisch oder nicht rotationssymmetrisch geformt sind. Die asymmetrischen Behältermäntel 11 umfassen jeweils eine erste ebene Mantelfläche 11A, eine zweite ebene Mantelfläche 11B, die gewinkelt zur ersten ebenen Mantelfläche 11A angeordnet und mit dieser unter Formung eines Ecks 11D verbunden ist, und eine gebogene Mantelfläche 11C, die mit der ersten ebenen Mantelfläche 11A und der zweiten ebenen Mantelfläche 11B verbunden ist.

An dem Behältermantel 11 und/ oder an dem Behälterboden 12 ist zumindest eine Griffmulde 18 vorgesehen, welche die Handhabung des Behälters 2 erleichtert.

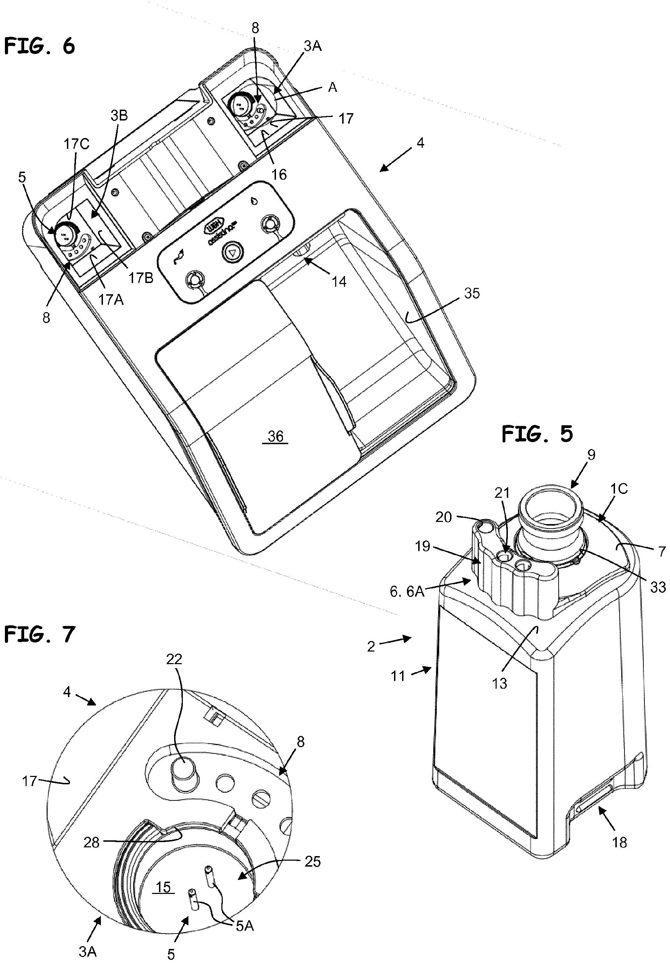

Die Behälter 2 sind zumindest teilweise in eine Aufnahme 3A, 3B, 3C eines medizinischen oder dentalen Reinigungs- oder Pflegegeräts 4 einführbar (siehe Figuren 6 und 8) und zur Förderung des Reinigungs- oder Pflegemediums aus dem Behälter 2 an eine Fördervorrichtung 5 des medizinischen oder dentalen Reinigungs- oder Pflegegeräts 4 anschließbar.

Die Kodierelemente 1A, 1B, 1C, 1D, 1E umfassen einen mechanischen Kodierabschnitt 6 und einen Verbindungsabschnitt 7 zum Verbinden des Kodierelements 1A, 1B, 1C, 1D, 1E mit einer Außenfläche des Behälters 2, zum Beispiel der Behälteroberseite 13 und/ oder dem Behältermantel 11 und/ oder dem Behälterauslass 9. Der mechanische Kodierabschnitt 6 ist für einen mechanischen Eingriff mit einem mechanischen Gegenelement 8 des Reinigungs- oder Pflegegeräts 4 vorgesehen, derart, dass ein Anschluss des Behälters 2 an die Fördervorrichtung 5 des medizinischen oder dentalen Reinigungs- oder Pflegegeräts 4 und eine Förderung des Reinigungs- oder Pflegemediums aus dem Behälter 2 nur möglich sind, wenn der mechanische Kodierabschnitt 6 mit einem dem mechanischen Kodierabschnitt 6 zugeordneten mechanischen Gegenelement 8 des Reinigungs- oder Pflegegeräts 4 in Eingriff gelangt.

Der mechanische Kodierabschnitt 6 und der Verbindungsabschnitt 7 sind gewinkelt zueinander angeordnet. Der mechanische Kodierabschnitt 6 weist ein sich von dem Verbindungsabschnitt 7 erstreckendes geometrisches Formelement 6A auf, das gemäß den Figuren 1, 2, 5 und 10 einen länglichen Fortsatz 19 umfasst. Der mechanische Kodierabschnitt 6 oder der Fortsatz 19 ist vorzugsweise leistenförmig und/ oder kreisbogenförmig geformt. Der mechanische Kodierabschnitt 6 oder Fortsatz 19 erstreckt sich insbesondere von der Behälteroberseite 13 parallel zu dem zylindrischen Behälterauslass 9. An der Oberseite oder freien Seite des mechanischen Kodierabschnitts 6 ist zumindest eine Öffnung 20 und ein daran anschließender, sich in den Kodierabschnitt 6 und/ oder in Richtung der Behälteroberseite 13 erstreckender Kanal 21 angeordnet. Der Kanal 21 ist insbesondere zur Aufnahme zumindest eines Abschnitts des Gegenelements 8 vorgesehen, zum Beispiel eines Stifts 22, siehe Figuren 7 und 9.

Die mechanischen Kodierabschnitte 6 der Kodierelemente 1A, 1C, 1D in den Figuren 1, 5 und 10 weisen eine unterschiedliche Anzahl von Öffnungen 20 und Kanälen 21 und/ oder unterschiedliche Positionen der Öffnungen 20 und Kanäle 21 auf: der Fortsatz 19 des mechanischen Kodierelements 1A umfasst zwei Kanäle 21, wobei ein Kanal 21 an einem Ende des Fortsatzes 19 und ein zweiter Kanal 21 zentral am Fortsatz 19 angeordnet ist; der Fortsatz 19 des mechanischen Kodierelements 1C umfasst drei Kanäle 21, wobei ein Kanal 21 an einem Ende des Fortsatzes 19, ein zweiter Kanal 21 zentral am Fortsatz 19 und der dritte Kanal 21 neben dem zweiten Kanal 21 angeordnet ist; der Fortsatz 19 des mechanischen Kodierelements 1D umfasst einen einzigen, zentral angeordneten Kanal 21. Mit Hilfe dieser unterschiedlichen Kodierelemente 1A, 1C, 1D lassen sich somit Behälter mit unterschiedlichen Medien, unterschiedlicher Hersteller und/ oder für verschiedene Kunden in einfacher Weise unterscheiden.

Die Figur 8 zeigt ein alternatives Ausführungsbeispiel eines mechanischen Kodierelements 1E und eines entsprechenden mechanischen Gegenelements 8: der mechanische Kodierabschnitt 6, insbesondere das geometrische Formelement 6A, umfasst zumindest einen Stift 23, der zum Eingriff in einen Kanal 24 der Aufnahme 3C vorgesehen ist.

Insbesondere aus den Figuren 7 - 9 ist des Weiteren erkennbar, dass ein Anschluss des Behälters 2 an die Fördervorrichtung 5 des medizinischen oder dentalen Reinigungs- oder Pflegegeräts 4 und eine Förderung des Reinigungs- oder Pflegemediums aus dem Behälter 2 nur möglich sind, wenn der mechanische Kodierabschnitt 6 mit einem dem mechanischen Kodierabschnitt 6 zugeordneten mechanischen Gegenelement 8 des Reinigungs- oder Pflegegeräts 4 in Eingriff gelangt. Denn nur wenn ein derartiger Eingriff erfolgt, ist der Verschluss des Behälters 2, zum Beispiel eine Membran, durch die Fördervorrichtung 5 oder ein mit der Fördervorrichtung 5 verbundenes Bauteil, zum Beispiel durch einen Anschluss, ein Röhrchen, eine Leitung 5A oder eine Kanüle, öffenbar oder durchsetzbar. Dazu ist zum Beispiel ein Teilvolumen 25 der Aufnahme 3A, 3B, 3C vorgesehen, in welchem der Behälterauslass 9 aufnehmbar ist. In diesem Teilvolumen 25, insbesondere an der Bodenfläche 15 der Aufnahme 3A, 3B, 3C, welche das Teilvolumen 25 begrenzt, sind die Leitung 5A oder der Anschluss der Fördervorrichtung 5 angeordnet. Das mechanische Gegenelement 8 ist vorzugsweise außerhalb des Teilvolumens 25 und/ oder beabstandet von der Bodenfläche 15 angeordnet. Die Länge der Leitung 5A oder des Anschlusses ist insbesondere derart bemessen, dass sie nur dann den Verschluss des Behälterauslasses 9 öffnen oder durchdringen (können), wenn der mechanische Kodierabschnitt 6 mit dem mechanischen Gegenelement 8 in Eingriff gelangt, so dass der Behälterauslass 9 ausreichend weit in das Teilvolumen 25 vordringt. Besonders bevorzugt ist der Verschluss des Behälterauslasses 9 nur dann durch die Leitung 5A oder den Anschluss öffenbar, wenn der Kodierabschnitt 6 und das Gegenelement 8 einander an einem oder mehreren Anschlägen 26, 27 kontaktieren (siehe Figur 9). Ein derartiger Kontakt der Anschläge 26, 27 kann vorzugsweise auch als ein vollständiges Ineinandergreifen des Kodierabschnitts 6 und des Gegenelements 8 bilden.

Das Teilvolumen 25, insbesondere die Bodenfläche 15, und das Gegenelement 8 sind vorzugsweise durch eine Schulter oder Stufe 28 voneinander getrennt (siehe Figur 7). Bevorzugt ist an dieser Stufe 28 das Gegenelement 8 angeordnet. Bevorzugt bildet die Schulter oder Stufe 28 eine Anlagefläche für die Behälteroberseite 13 des Behälters 2 und/ oder für zumindest einen Teil des mechanischen Kodierelements 1A, 1B, 1C, 1D, 1E.

Die Figur 2 zeigt, wie der Verbindungsabschnitt 7 ausgebildet ist, um das Kodierelement 1A, 1B, 1C, 1D, 1E unlösbar und/ oder verdrehsicher mit einer Außenfläche, zum Beispiel der Behälteroberseite 13 und/ oder dem Behälterauslass 9, des Behälters 2 zu verbinden, so dass eine zerstörungsfreie Entfernung des Kodierelements 1A, 1B, 1C, 1D, 1E von dem Behälter 2 unmöglich ist. Dazu ist der Verbindungsabschnitt 7 als Drehelement oder Drehring ausgebildet, der mit dem Behälter 2 verbindbar und relativ zu dem Behälter 2 drehbar ist, bis das Kodierelement 1A, 1B, 1C, 1D, 1E und der Behälter 2 durch eine Rast- oder Formschlussverbindung unlösbar und/ oder verdrehsicher miteinander verbunden sind. Dazu weist der Verbindungsabschnitt 7 zum Beispiel eine Öffnung 33 auf, an deren Seitenwand zumindest ein als Formschluss- oder Rastelement ausgebildeter, beweglicher Rastflügel 29 sowie zumindest eine Ausnehmungen 30 vorgesehen sind.

Am Behälter 2, insbesondere an der Behälteroberseite 13 und/ oder an dem Behälterauslass 9, ist ein Behälter-Verbindungsabschnitt 31 vorgesehen (siehe Figuren 3 und 4), der zur Verbindung, insbesondere zum Eingriff, mit dem Verbindungsabschnitt 7 des Kodierelements 1A, 1B, 1C, 1D, 1E vorgesehen ist. Der Behälter-Verbindungsabschnitt 31 umfasst zum Beispiel einen, vorzugsweise mehrere, um den Behälterauslass 9 angeordnete(n) Einrastnocken 32. Durch Aufsetzen des Kodierelements 1A, 1B, 1C, 1D, 1E auf den Behälter 2 und durch anschließendes Drehen des Kodierelements 1A, 1B, 1C, 1D, 1E, insbesondere des als Drehring ausgebildeten Verbindungsabschnitts 7, gelangen die Einrastnocken 32 in die Ausnehmungen 30 und die Rastflügel 29 federn in Richtung der Öffnung 33, wodurch das Kodierelement 1A, 1B, 1C, 1D, 1E und der Behälter 2 unlösbar und verdrehsicher miteinander verbunden sind (siehe auch Figur 10). Selbstverständlich ist es auch möglich, die Einrastnocken 32 an dem Kodierelement 1A, 1B, 1C, 1D, 1E und die Rastflügel 29 an dem Behälter 2 vorzusehen oder andere Formschluss- oder Rastelemente zu verwenden.

Insbesondere in den Figuren 1, 5 und 10 ist zu erkennen, dass der Verbindungsabschnitt 7 ausgebildet ist, zum Verbinden des Kodierelements 1A, 1B, 1C, 1D, 1E mit einer Außenfläche 9, 11, 13 des Behälters 2 zumindest einen Abschnitt des Behälters 2, insbesondere den Behälterauslass 9, zu umgreifen. Vorzugsweise umgibt der Verbindungsabschnitt 7 den Behälterauslass 9 vollständig, insbesondere in dem der Behälterauslass 9 in der Öffnung 33 des Verbindungsabschnitts 7 aufgenommen ist.

Aus der Figur 8 ist zu erkennen, dass der Behälter 2 eine Längsachse 10 aufweist, entlang welcher der Behälter 2 in die Aufnahme 3A, 3B, 3C eines medizinischen oder dentalen Reinigungs- oder Pflegegeräts 4 einführbar und insbesondere der mechanische Kodierabschnitt 6 des Kodierelements 1A, 1B, 1C, 1D, 1E mit einem mechanischen Gegenelement 8 des Reinigungs- oder Pflegegeräts 4 in Eingriff bringbar ist. In entsprechender Weise sind entlang einer Längsachse 34 der Aufnahme 3A, 3B, 3C der Behälter 2 in die Aufnahme 3A, 3B, 3C einführbar und der Kodierabschnitt 6 mit dem mechanischen Gegenelement 8 in Eingriff bringbar.

In der Figur 6 ist ein medizinisches oder dentales Reinigungs- oder Pflegegerät 4 zur Reinigung oder Pflege eines medizinischen oder dentalen Instruments dargestellt. Das Reinigungs- oder Pflegegerät 4 umfasst unter anderem eine Fördervorrichtung 5 mit einer Förderleitung 5A zur Förderung eines Reinigungs- oder Pflegemediums aus einem Behälter 2, eine mit der Fördervorrichtung 5 verbundene Abgabevorrichtung 14 zur Abgabe eines Reinigungs- oder Pflegemediums auf und/ oder in das Instrument und zwei Aufnahmen 3A, 3B für jeweils zumindest einen Abschnitt eines Behälters 2 zur Lagerung eines Reinigungs- oder Pflegemediums. Des Weiteren umfasst das Reinigungs- oder Pflegegerät 4 zumindest eine Kammer 35, in der ein zu reinigendes oder zu pflegendes Instrument aufnehmbar ist. Die Kammer 35 ist durch einen Deckel 36 verschließbar.

Die Abgabevorrichtung 14 umfasst zum Beispiel eine oder mehrere Düsen zur Abgabe eines Reinigungs- oder Pflegemediums an das zu reinigende oder zu pflegende Instrument und/ oder zumindest ein Kupplungselement zum Verbinden des zu reinigenden oder zu pflegenden Instruments mit der Fördervorrichtung 5. Die Abgabevorrichtung 14 ist insbesondere in der Kammer 35 angeordnet.

Die zumindest eine Aufnahme 3A, 3B, insbesondere deren Raumabschnitt 25 zur Aufnahme des Behälterauslasses 9, umfasst eine Bodenfläche 15 mit zumindest einem Abschnitt der Förderleitung 5A, der insbesondere als Anschluss an den Behälter 2 ausgebildet ist, eine Aufnahmeöffnung 16 für den Behälter 2 und eine Seitenwand oder Wand 17, welche die Bodenfläche 15 mit der Aufnahmeöffnung 16 verbindet. In jeder Aufnahme 3A, 3B ist jeweils ein Gegenelement 8 angeordnet, insbesondere erhöht oder beabstandet von der Bodenfläche 15 und/ oder von dem von der Bodenfläche 15 in die Aufnahme 3A, 3B ragenden Anschluss oder Förderleitungsabschnitt 5A.

Die Seitenwände 17 der Aufnahmen 3A, 3B sind jeweils asymmetrisch geformt. Vorzugsweise umfassen die asymmetrisch geformten Seitenwände 17 jeweils eine erste ebene Wandfläche 17A, eine zweite ebene Wandfläche 17B, die gewinkelt zur ersten ebenen Wandfläche 17A angeordnet und mit dieser verbunden ist, und eine gebogene Wandfläche 17C, die mit der ersten ebenen Wandfläche 17A und der zweiten ebenen Wandfläche 17B verbunden ist. Des Weiteren sind die Aufnahmen 3A, 3B, insbesondere die asymmetrisch geformten Wände 17, (relativ zueinander) spiegelverkehrt ausgebildet.

Die zwei Behälter 2 des Behälter-Sets der Figur 10 weisen asymmetrisch geformte Behältermäntel 11 auf, die relativ zueinander spiegelverkehrt ausgebildet sind. Jeweils einer der beiden Behälter 2 des Behälter-Sets der Figur 10 und eine der Aufnahmen 3A, 3B des Reinigungs- oder Pflegegeräts 4 der Figur 6 weisen somit korrespondierende (asymmetrische) Formen auf.

Aufgrund dieser korrespondierende (asymmetrische) Formen sind die beiden Behälter 2 des Behälter-Sets der Figur 10 jeweils nur in eine Aufnahme 3A, 3B des Reinigungs- oder Pflegegeräts 4 einführbar: der in der Figur 10 linke Behälter 2 ist in die Aufnahme 3A und der in der Figur 10 rechte Behälter 2 ist in die Aufnahme 3B einführbar. Damit ist zusätzlich zu der das Kodierelement 1A, 1B, 1C, 1D, 1E und das Gegenelement 8 umfassenden Kodiereinheit eine weitere Vorkehrung geschaffen, welche die Aufnahme eines Behälter 2 in eine unpassende Kammer 3A, 3B, 3C und eine Verbindung des Behälters 2 mit einem falschen Anschluss 5A der Fördervorrichtung verhindert. Auch gewährleisten die korrespondierenden (asymmetrischen) Formen jeweils eines Behälters 2 mit einer Aufnahme 3A, 3B, dass das Kodierelement 1A, 1B, 1C, 1D, 1E und das Gegenelement 8 aufeinander zu bewegt werden bzw. aufeinander treffen, da es nur eine einzige Möglichkeit gibt, den Behälter 2 (mit dem Behälterauslass 9 in Richtung des Anschlusses 5A) in die jeweilige Aufnahme 3A, 3B einzuführen.

Die Kodierelemente 1D der beiden Behälter 2 des Behälter-Sets der Figur 10 sind ident ausgebildet, d.h. sie weisen jeweils einen zentral an der Oberfläche des Fortsatzes 19 angeordneten Kanal 21 auf. Die Kodierelemente 1D sind somit insbesondere dazu vorgesehen, die Behälter 2 des Sets der Figur 10 von Behältern eines anderen Behältersets (mit unterschiedlichen Kodierelementen) zu unterscheiden. Die korrekte Aufnahme des jeweiligen Behälters 2 in eine passende Kammer 3A, 3B eines Reinigungs- oder Pflegegeräts 4 wird durch die asymmetrische Form der beiden Behälter 2 des Behälter-Sets gewährleistet, wie dies im vorstehenden Absatz beschrieben ist. Selbstverständlich ist es auch denkbar, dass Behälter eines Behältersets unterschiedliche Kodierelement 1A, 1B, 1C, 1D, 1E aufweisen.

Die beschriebenen oder dargestellten Ausführungsbeispiele dienen insbesondere der Veranschaulichung der Erfindung. Die in einem Ausführungsbeispiel offenbarten Merkmale sind daher nicht auf dieses Ausführungsbeispiel beschränkt, sondern sind einzeln oder gemeinsam mit einem oder mehreren Merkmalen eines der anderen Ausführungsbeispiele kombinierbar.

## Patentansprüche

1. Behälter (2) zur Lagerung eines Reinigungs- oder Pflegemediums, wobei der Behälter (2) zumindest teilweise in eine Aufnahme (3A, 3B, 3C) eines medizinischen oder dentalen Reinigungs- oder Pflegegeräts (4) einführbar ist und zur Förderung des Reinigungs- oder Pflegemediums aus dem Behälter (2) an eine Fördervorrichtung (5) des medizinischen oder dentalen Reinigungs- oder Pflegegeräts (4) anschließbar ist, wobei der Behälter (2) aufweist: einen Behälterboden (12), eine Behälteroberseite (13), an der ein Behälterhals oder Behälterauslass (9) zur Abgabe eines Reinigungs- oder Pflegemediums vorgesehen ist, einen Behältermantel (11), der den Behälterboden (12) und die Behälteroberseite (13) verbindet, und ein separates Kodierelement (1A, 1B, 1C, 1D, 1E) zur Unterscheidung von unterschiedliche Reinigungs- oder Pflegemedien enthaltenden Behältern (2), wobei das Kodierelement (1A, 1B, 1C, 1D, 1E) umfasst: einen mechanischen Kodierabschnitt (6) und einen Verbindungsabschnitt (7) zum Verbinden des separaten Kodierelements (1A, 1B, 1C, 1D, 1E) mit einer Außenfläche (11, 13) des Behälters (2), wobei der mechanische Kodierabschnitt (6) für einen mechanischen Eingriff mit einem mechanischen Gegenelement (8) des Reinigungs- oder Pflegegeräts (4) vorgesehen ist, derart, dass ein Anschluss des Behälters (2) an die Fördervorrichtung (5) des medizinischen oder dentalen Reinigungs- oder Pflegegeräts (4) und eine Förderung des Reinigungs- oder Pflegemediums aus dem Behälter (2) nur möglich sind, wenn der mechanische Kodierabschnitt (6) mit einem dem mechanischen Kodierabschnitt (6) zugeordneten mechanischen Gegenelement (8) des Reinigungs- oder Pflegegeräts (4) in Eingriff gelangt, **dadurch gekennzeichnet, dass**
der Verbindungsabschnitt (7) als Manschette ausgebildet ist, die den Behälterhals (9) umgreift oder umgibt und die eine Öffnung (33) aufweist, in welcher der Behälterhals (9) derart aufgenommen ist, dass der Behälterhals (9) den Verbindungsabschnitt (7) durchdringt, so dass sich der mechanische Kodierabschnitt (6) parallel zu dem Behälterhals (9) erstreckt.

2. Behälter (2) nach Anspruch 1, **dadurch gekennzeichnet, dass** der mechanische Kodierabschnitt (6) ein sich von dem Verbindungsabschnitt (7) erstreckendes geometrisches Formelement (6A) aufweist.

3. Behälter (2) nach Anspruch 2, **dadurch gekennzeichnet, dass** geometrische Formelement (6A) einen Fortsatz, einen Stift, eine Öffnung oder einen Kanal aufweist.

4. Behälter (2) nach einem der vorstehenden Ansprüche, **dadurch gekennzeichnet, dass** sich der mechanische Kodierabschnitt (6) nicht über den Behälterauslass (9) hinaus erstreckt.

5. Behälter (2) nach einem der vorstehenden Ansprüche, **dadurch gekennzeichnet, dass** das Kodierelement (1A, 1B, 1C, 1D, 1E) mittels des Verbindungsabschnitts (7) des Kodierelements (1A, 1B, 1C, 1D, 1E) und/ oder eines Verbindungsabschnitts (31) des Behälters (2) unlösbar und/ oder verdrehsicher mit einer Außenfläche (9, 11, 13) des Behälters (2) verbindbar ist, so dass eine zerstörungsfreie Entfernung des Kodierelements (1A, 1B, 1C, 1D, 1E) von dem Behälter (2) unmöglich ist.

6. Behälter (2) nach einem der vorstehenden Ansprüche, **dadurch gekennzeichnet, dass** der Verbindungsabschnitt (7) flächig, plattenförmig und/ oder gebogen ausgebildet ist.

7. Behälter (2) nach einem der vorstehenden Ansprüche, **dadurch gekennzeichnet, dass** der Behälter (2) eine Längsachse (10) aufweist, entlang welcher der Behälter (2) in eine Aufnahme (3A, 3B, 3C) eines medizinischen oder dentalen Reinigungs- oder Pflegegeräts (4) einführbar und der mechanische Kodierabschnitt (6) des Kodierelements (1A, 1B, 1C, 1D, 1E) mit einem mechanischen Gegenelement (8) des Reinigungs- oder Pflegegeräts (4) in Eingriff bringbar ist.

8. Behälter (2) nach einem der vorstehenden Ansprüche, **dadurch gekennzeichnet, dass** der mechanische Kodierabschnitt (6) einen leistenförmigen, vorzugsweise gebogenen, geometrischen Formkörper (6A) mit zumindest einem Kanal (21) zur Aufnahme oder zum Eingriff zumindest eines Abschnitts (22) des mechanischen Gegenelements (8) aufweist.

9. Behälter (2) nach einem der vorstehenden Ansprüche, **dadurch gekennzeichnet, dass** der Behältermantel (11) des Behälters (2) asymmetrisch oder nicht rotationssymmetrisch um eine Längsachse (10) des Behälters (2) ist.

10. Behälter (2) nach einem der vorstehenden Ansprüche, **dadurch gekennzeichnet, dass** der Behältermantel (11) asymmetrisch geformt ist und aufweist: eine erste ebene Mantelfläche (11A), eine zweite ebene Mantelfläche (11B), die gewinkelt zur ersten ebenen Mantelfläche (11A) angeordnet und mit dieser verbunden ist, und eine gebogene Mantelfläche (11C), die mit der ersten ebenen Mantelfläche (11A) und der zweiten ebenen Mantelfläche (11B) verbunden ist.

11. Medizinisches oder dentales Reinigungs- oder Pflegegerät (4) zur Reinigung oder Pflege eines medizinischen oder dentalen Instruments, umfassend: eine Fördervorrichtung (5) zur Förderung eines Reinigungs- oder Pflegemediums aus einem Behälter (2), eine mit der Fördervorrichtung (5) verbundene Abgabevorrichtung zur Abgabe eines Reinigungs- oder Pflegemediums auf und/ oder in das Instrument, zumindest eine Aufnahme (3A, 3B, 3C) für zumindest einen Abschnitt eines Behälters (2) zur Lagerung eines Reinigungs- oder Pflegemediums und einen Behälter (2) zur Lagerung eines Reinigungs- oder Pflegemediums nach einem der Ansprüche 1 - 10, **dadurch gekennzeichnet, dass**
in oder an der Aufnahme (3A, 3B, 3C) ein mechanisches Gegenelement (8) angeordnet ist, das für einen mechanischen Eingriff mit einem mechanischen Kodierabschnitt (6) des Kodierelements (1A, 1B, 1C, 1D, 1E) des Behälters (2) zur Lagerung eines Reinigungs- oder Pflegemediums vorgesehen ist, derart, dass ein Anschluss des Behälters (2) an die Fördervorrichtung (5) des medizinischen oder dentalen Reinigungs- oder Pflegegeräts (4) und eine Förderung des Reinigungs- oder Pflegemediums aus dem Behälter (2) nur möglich sind, wenn das mechanische Gegenelement (8) mit einem dem mechanischen Gegenelement (8) zugeordneten mechanischen Kodierabschnitt (6) des Kodierelements (1A, 1B, 1C, 1D, 1E) des Behälters (2) in Eingriff gelangt.

12. Medizinisches oder dentales Reinigungs- oder Pflegegerät (4) nach Anspruch 11, **dadurch gekennzeichnet, dass**
Fördervorrichtung (5) eine Förderleitung (5A) aufweist und die zumindest eine Aufnahme (3A, 3B, 3C) zum Aufnehmen zumindest eines Abschnitts eines Behälters (2) zur Lagerung eines Reinigungs- oder Pflegemediums nach Anspruch 10 vorgesehen ist, wobei die zumindest eine Aufnahme (3A, 3B, 3C) eine Bodenfläche (15) mit zumindest einem Abschnitt einer Förderleitung (5A), eine Aufnahmeöffnung (16) für den Behälter (2) und eine Wand (17), welche die Bodenfläche (15) mit der Aufnahmeöffnung (16) verbindet, aufweist, wobei die Wand (17) asymmetrisch geformt ist.

13. Set von Behältern (2) zur Lagerung eines Reinigungs- oder Pflegemediums, wobei jeder der Behälter (2) des Sets zumindest teilweise in eine Aufnahme (3A, 3B, 3C) eines medizinischen oder dentalen Reinigungs- oder Pflegegeräts (4) einführbar ist und zur Förderung des Reinigungs- oder Pflegemediums aus dem Behälter (2) an eine Fördervorrichtung (5) des medizinischen oder dentalen Reinigungs- oder Pflegegeräts (4) anschließbar ist, **dadurch gekennzeichnet, dass** das Set von Behältern (2) umfasst: zumindest einen Behälter (2) nach einem der vorstehenden Ansprüche 1 - 10 oder zumindest zwei Behälter (2) nach Anspruch 9 oder 10, die spiegelverkehrte Behältermäntel (11) aufweisen.

14. Verfahren zur Herstellung eines Behälters (2) zur Lagerung eines Reinigungs- oder Pflegemediums nach einem der Ansprüche 1 - 10, **gekennzeichnet durch** die Schritte:
- zur Verfügung stellen eines Behälters (2),
- zur Verfügung stellen eines separaten Kodierelements (1A, 1B, 1C, 1D, 1E) mit einem mechanischen Kodierabschnitt (6) und einem als Manschette ausgebildeten Verbindungsabschnitt (7) zum Verbinden des separaten Kodierelements (1A, 1B, 1C, 1D, 1E) mit einer Außenfläche (11, 13) des Behälters (2), wobei der mechanische Kodierabschnitt (6) für einen mechanischen Eingriff mit einem mechanischen Gegenelement (8) eines Reinigungs- oder Pflegegeräts (4) vorgesehen ist, derart, dass ein Anschluss des Behälters (2) an eine Fördervorrichtung (5) eines medizinischen oder dentalen Reinigungs- oder Pflegegeräts (4) und eine Förderung des Reinigungs- oder Pflegemediums aus dem Behälter (2) nur möglich sind, wenn der mechanische Kodierabschnitt (6) mit einem dem mechanischen Kodierabschnitt (6) zugeordneten mechanischen Gegenelement (8) des Reinigungs- oder Pflegegeräts (4) in Eingriff gelangt,
- Verbinden des separaten Kodierelements (1A, 1B, 1C, 1D, 1E) mit dem Behälter (2) durch den Verbindungsabschnitt (7), so dass der als Manschette ausgebildete Verbindungsabschnitt (7) den Behälterhals (9) umgreift oder umgibt und der Behälterhals (9) in einer Öffnung (33) der Manschette derart aufgenommen ist, dass der Behälterhals (9) den Verbindungsabschnitt (7) durchdringt, so dass sich der mechanische Kodierabschnitt (6) parallel zu dem Behälterhals (9) erstreckt, und
- Befüllen des Behälters (2) mit einem Reinigungs- oder Pflegemedium für ein medizinisches oder dentales Reinigungs- oder Pflegegerät (4) vor oder nach dem Verbinden des Kodierelements (1A, 1B, 1C, 1D, 1E) mit dem Behälter (2).

## Claims

1. A container (2) for storing a cleaning or maintenance medium, the container (2) being insertable at least partially into a receptacle (3A, 3B, 3C) of a medical or dental cleaning or maintenance apparatus (4) and connectable to a conveying device (5) of the medical or dental cleaning or maintenance apparatus (4) to convey the cleaning or maintenance medium out of the container (2), wherein the container (2) comprises: a container bottom (12), a container upper side (13) on which a container neck or container outlet (9) is provided to dispense a cleaning or maintenance medium, a container shell (11) which connects the container bottom (12) and the container upper side (13), and a separate coding element (1A, 1B, 1C, 1D, 1E) to distinguish containers (2) containing different cleaning or maintenance media, wherein the coding element (1A, 1B, 1C, 1D, 1E) comprises: a mechanical coding section (6) and a connecting section (7) for connecting the separate coding element (1A, 1B, 1C, 1D, 1E) to an outer face (11, 13) of the container (2), the mechanical coding section (6) being provided for mechanical engagement with a mechanical mating element (8) of the cleaning or maintenance apparatus (4) in such a manner that connection of the container (2) to the conveying device (5) of the medical or dental cleaning or maintenance apparatus (4) and conveying of the cleaning or maintenance medium out of the container (2) are possible only when the mechanical coding section (6) engages with a mechanical mating element (8) of the cleaning or maintenance apparatus (4) associated with the mechanical coding section (6), **characterised in that** the connecting section (7) is in the form of a collar which encompasses or surrounds the container neck (9) and which comprises an opening (33) in which the container neck (9) is held in such a manner that the container neck (9) penetrates the connecting section (7) such that the mechanical coding section (6) extends parallel to the container neck (9).

2. The container (2) according to Claim 1, **characterised in that**
the mechanical coding section (6) comprises a geometric shape element (6A) which extends from the connecting section (7).

3. The container (2) according to Claim 2, **characterised in that**
the geometric shape element (6A) comprises a projection, a pin, an opening or a duct.

4. The container (2) according to any one of the preceding claims, **characterised in that** the mechanical coding section (6) does not extend beyond the container outlet (9).

5. The container (2) according to any one of the preceding claims, **characterised in that** the coding element (1A, 1B, 1C, 1D, 1E) is connectable to an outer face (9, 11, 13) of the container (2) in a non-detachable and/or non-rotatable manner by means of the connecting section (7) of the coding element (1A, 1B, 1C, 1D, 1E) and/or a connecting section (31) of the container (2), such that it is not possible to remove the coding element (1A, 1B, 1C, 1D, 1E) from the container (2) without destroying it.

6. The container (2) according to any one of the preceding claims, **characterised in that** the connecting section (7) is flat, planar and/or curved.

7. The container (2) according to any one of the preceding claims, **characterised in that** the container (2) comprises a longitudinal axis (10) along which the container (2) is insertable into a receptacle (3A, 3B, 3C) of a medical or dental cleaning or maintenance apparatus (4), and the mechanical coding section (6) of the coding element (1A, 1B, 1C, 1D, 1E) can be brought into engagement with a mechanical mating element (8) of the cleaning or maintenance apparatus (4).

8. The container (2) according to any one of the preceding claims, **characterised in that** the mechanical coding section (6) comprises a strip-shaped, preferably curved, geometric shaped body (6A) having at least one duct (21) for receiving or engaging with at least one section (22) of the mechanical mating element (8).

9. The container (2) according to any one of the preceding claims, **characterised in that** the container shell (11) of the container (2) is asymmetrical or not rotationally symmetrical about a longitudinal axis (10) of the container (2).

10. The container (2) according to any one of the preceding claims, **characterised in that** the container shell (11) is asymmetrical and comprises: a first flat shell face (11A), a second flat shell face (11B) which is at an angle to the first flat shell face (11A) and is connected to same, and a curved shell face (11C) which is connected to the first flat shell face (11A) and the second flat shell face (11B).

11. A medical or dental cleaning or maintenance apparatus (4) for cleaning or maintaining a medical or dental instrument, comprising: a conveying device (5) for conveying a cleaning or maintenance medium out of a container (2), a dispensing device for dispensing a cleaning or maintenance medium onto and/or into the instrument and which is connected to the conveying device (5), at least one receptacle (3A, 3B, 3C) for at least a section of a container (2) for storing a cleaning or maintenance medium, and a container (2) for storing a cleaning or maintenance medium according to any one of Claims 1-10, **characterised in that**
in or on the receptacle (3A, 3B, 3C) there is a mechanical mating element (8), which is provided for mechanical engagement with a mechanical coding section (6) of the coding element (1A, 1B, 1C, 1D, 1E) of the container (2) for storing a cleaning or maintenance medium in such a manner that connection of the container (2) to the conveying device (5) of the medical or dental cleaning or maintenance apparatus (4) and conveying of the cleaning or maintenance medium out of the container (2) are possible only when the mechanical mating element (8) engages with a mechanical coding section (6) of the coding element (1A, 1B, 1C, 1D, 1E) of the container (2) which is associated with the mechanical mating element (8).

12. The medical or dental cleaning or maintenance apparatus (4) according to Claim 11,
**characterised in that**
the conveying device (5) comprises a conveying line (5A) and the at least one receptacle (3A, 3B, 3C) is provided for receiving at least a section of a container (2) for storing a cleaning or maintenance medium according to Claim 10, wherein the at least one receptacle (3A, 3B, 3C) comprises a bottom face (15) with at least a section of a conveying line (5A), a receiving opening (16) for the container (2), and a wall (17) connecting the bottom face (15) to the receiving opening (16), wherein the wall (17) is asymmetrical.

13. A set of containers (2) for storing a cleaning or maintenance medium, each of the containers (2) of the set being insertable at least partially into a receptacle (3A, 3B, 3C) of a medical or dental cleaning or maintenance apparatus (4) and connectable to a conveying device (5) of the medical or dental cleaning or maintenance apparatus (4) to convey the cleaning or maintenance medium out of the container (2),
**characterised in that**
the set of containers (2) comprises: at least one container (2) according to any one of the preceding Claims 1-10 or at least two containers (2) according to Claim 9 or 10, which have mirror-inverted container shells (11).

14. A method for producing a container (2) for storing a cleaning or maintenance medium according to any one of Claims 1-10, **characterised by** the steps:
- providing a container (2),
- providing a separate coding element (1A, 1B, 1C, 1D, 1E) having a mechanical coding section (6) and a connecting section (7) in the form of a collar for connecting the separate coding element (1A, 1B, 1C, 1D, 1E) to an outer face (11, 13) of the container (2), the mechanical coding section (6) being provided for mechanical engagement with a mechanical mating element (8) of a cleaning or maintenance apparatus (4) in such a manner that connection of the container (2) to a conveying device (5) of a medical or dental cleaning or maintenance apparatus (4) and conveying of the cleaning or maintenance medium out of the container (2) are possible only when the mechanical coding section (6) engages with a mechanical mating element (8) of the cleaning or maintenance apparatus (4) which is associated with the mechanical coding section (6),
- connecting the separate coding element (1A, 1B, 1C, 1D, 1E) to the container (2) by means of the connecting section (7) such that the connecting section (7) in the form of a collar encompasses or surrounds the container neck (9) and the container neck (9) is held in an opening (33) of the collar in such a manner that the container neck (9) penetrates the connecting section (7) such that the mechanical coding section (6) extends parallel to the container neck (9), and
- filling the container (2) with a cleaning or maintenance medium for a medical or dental cleaning or maintenance apparatus (4) before or after the coding element (1A, 1B, 1C, 1D, 1E) is connected to the container (2).

## Revendications

1. Récipient (2), destiné au stockage d'un agent de lavage ou d'entretien, le récipient (2) pouvant s'introduire au moins en partie dans un logement (3A, 3B, 3C) d'un appareil de lavage ou d'entretien (4) médical ou dentaire et pour le transport de l'agent de lavage ou d'entretien hors du récipient (2), pouvant se raccorder sur un dispositif de transport (5) de l'appareil de lavage ou d'entretien (4) médical ou dentaire, le récipient (2) comportant: un fond de récipient (12), une face supérieure de récipient (13), sur laquelle est prévu(e) un goulot de récipient ou une sortie de récipient (9), pour la distribution d'un agent de lavage ou d'entretien, une enveloppe de récipient (11) qui relie le fond de récipient (12) et la face supérieure de récipient (13) et un élément de codage (1A, 1B, 1C, 1D, 1E) séparé, destiné à distinguer des récipients (2) contenant différents agents de lavage ou d'entretien, l'élément de codage (1A, 1B, 1C, 1D, 1E) comprenant: une partie mécanique de codage (6) et une partie d'assemblage (7), destinée à assembler l'élément de codage (1A, 1B, 1C, 1D, 1E) séparé avec une surface extérieure (11, 13) du récipient (2), la partie mécanique de codage (6) étant prévue pour un engagement mécanique dans un élément mécanique antagoniste (8) de l'appareil de lavage ou d'entretien (4), de telle sorte qu'un raccordement du récipient (2) sur le dispositif de transport (5) de l'appareil de lavage ou d'entretien (4) médical ou dentaire et un transport de l'agent de lavage ou d'entretien hors du récipient (2) ne soient possibles que lorsque la partie mécanique de codage (6) arrive en engagement avec un élément mécanique antagoniste (8) de l'appareil de lavage ou d'entretien (4) associé à la partie mécanique de codage (6), **caractérisé en ce que** la partie d'assemblage (7) est conçue sous la forme d'une manchette qui enserre ou entoure le goulot de récipient (9) et qui comporte un orifice (33) dans lequel le goulot de récipient (9) est réceptionné de telle sorte que le goulot de récipient (9) traverse la partie d'assemblage (7), de sorte que la partie mécanique de codage (6) s'étende à la parallèle du goulot de récipient (9).

2. Récipient (2) selon la revendication 1, **caractérisé en ce que**
la partie mécanique de codage (6) comporte un élément géométrique façonné (6A) qui s'étend à partir de la partie d'assemblage (7).

3. Récipient (2) selon la revendication 2, **caractérisé en ce que**
l'élément géométrique façonné (6A) comporte un prolongement, une tige, un orifice ou un canal.

4. Récipient (2) selon l'une quelconque des revendications précédentes, **caractérisé en ce que**
la partie mécanique de codage (6) ne s'étend pas au-delà de la sortie du récipient (9).

5. Récipient (2) selon l'une quelconque des revendications précédentes, **caractérisé en ce que**
l'élément de codage (1A, 1B, 1C, 1D, 1E) est susceptible d'être assemblé de manière inamovible et/ou bloquée en rotation à l'aide de la partie d'assemblage (7) de l'élément de codage (1A, 1B, 1C, 1D, 1E) et/ ou d'une partie d'assemblage (31) du récipient (2) avec une surface extérieure (9, 11, 13) du récipient (2), de telle sorte qu'un retrait non destructif de l'élément de codage (1A, 1B, 1C, 1D, 1E) du récipient (2) soit impossible.

6. Récipient (2) selon l'une quelconque des revendications précédentes, **caractérisé en ce que**
la partie d'assemblage (7) est conçue en nappe, en forme de plaque et/ ou de forme curviligne.

7. Récipient (2) selon l'une quelconque des revendications précédentes, **caractérisé en ce que**
le récipient (2) comporte un axe longitudinal (10) le long duquel le récipient (2) peut s'introduire dans un logement (3A, 3B, 3C) d'un appareil de lavage ou d'entretien (4) médical ou dentaire et la partie mécanique de codage (6) de l'élément de codage (1A, 1B, 1C, 1D, 1E) peut être amenée en engagement avec l'élément mécanique antagoniste (8) de l'appareil de lavage ou d'entretien (4).

8. Récipient (2) selon l'une quelconque des revendications précédentes, **caractérisé en ce que**
la partie mécanique de codage (6) comporte un corps géométrique façonné (6A) en forme de baguette, de préférence curviligne, pourvu d'au moins un canal (21) pour le logement ou pour l'engagement d'au moins une partie (22) de l'élément mécanique antagoniste (8).

9. Récipient (2) selon l'une quelconque des revendications précédentes, **caractérisé en ce que**
l'enveloppe de récipient (11) du récipient (2) est asymétrique ou non symétrique en rotation autour d'un axe longitudinal (10) du récipient (2).

10. Récipient (2) selon l'une quelconque des revendications précédentes, **caractérisé en ce que**
l'enveloppe de récipient (11) est de forme asymétrique et comporte: une première surface d'enveloppe plane (11A), une deuxième surface d'enveloppe plane (11B), qui est placée en étant coudée par rapport à la première surface d'enveloppe plane (11A) et qui est assemblée avec celle-ci et une surface d'enveloppe curviligne (11C), qui est assemblée avec la première surface d'enveloppe plane (11A) et la deuxième surface d'enveloppe plane (11B).

11. Appareil de lavage ou d'entretien (4) médical ou dentaire, destiné à laver ou à entretenir un instrument médical ou dentaire, comprenant: un dispositif de transport (5) pour le transport d'un agent de lavage ou d'entretien hors d'un récipient (2), un dispositif distributeur, relié avec le dispositif de transport (5), destiné à distribuer un agent de lavage ou d'entretien sur et/ou dans l'instrument, au moins un logement (3A, 3B, 3C) pour au moins une partie d'un récipient (2), destinée au stockage d'un agent de lavage ou d'entretien, et un récipient (2), destiné au stockage d'un agent de lavage ou d'entretien selon l'une quelconque des revendications 1 à 10, **caractérisé en ce que**
dans ou sur le logement (3A, 3B, 3C) est placé un élément mécanique antagoniste (8) qui est prévu pour s'engager mécaniquement dans une partie mécanique de codage (6) de l'élément de codage (1A, 1B, 1C, 1D, 1E) du récipient (2) pour réceptionner un agent de lavage ou d'entretien, de telle sorte qu'un raccordement du récipient (2) sur le dispositif de transport (5) de l' appareil de lavage ou d'entretien (4) médical ou dentaire et un transport de l'agent de lavage ou d'entretien hors du récipient (2) ne soient possibles que lorsque l'élément mécanique antagoniste (8) arrive en engagement avec une partie mécanique de codage (6) de l'élément de codage (1A, 1B, 1C, 1D, 1E) du récipient (2) associée à l'élément mécanique antagoniste (8).

12. Appareil de lavage ou d'entretien (4) selon la revendication 11, **caractérisé en ce que** le dispositif de transport (5) comprend un conduit de transport (5A) et l'au moins un logement (3A, 3B, 3C) est prévu pour recevoir au moins une partie d'un récipient (2) destiné à au stockage d'un agent de lavage ou d'entretien selon la revendication 10, l'au moins logement (3A, 3B, 3C) comporte une surface de fond inférieur (15) avec au moins un tronçon d'un conduit de transport (5A), un orifice dans le logement (16) pour le récipient (2) et une paroi (17), qui relie la surface de fond inférieur (15) avec l'orifice dans le logement (16), la paroi (17) étant de forme asymétrique.

13. Kit de récipients (2) destinés au stockage d'un agent de lavage ou d'entretien, chaque récipient (2) du kit pouvant s'introduire au moins en partie dans un logement (3A, 3B, 3C) d'un appareil de lavage ou d'entretien (4) médical ou dentaire et pour le transport de l'agent de lavage ou d'entretien hors du récipient (2), pouvant se raccorder sur un dispositif de transport (5) de l'appareil de lavage ou d'entretien (4) médical ou dentaire, **caractérisé en ce que**
le kit de récipients (2) comprend: au moins un récipient (2) selon l'une quelconque des revendications précédentes 1 à 10 ou au moins deux récipients (2) selon la revendication 9 ou 10, qui comportent des enveloppes de récipient (11) en symétrie inversée.

14. Procédé de fabrication d'un récipient (2) destiné au stockage d'un agent de lavage ou d'entretien selon l'une quelconque des revendications 1 à 10, **caractérisé par** les étapes consistant à:
- mettre à disposition un récipient (2),
- mettre à disposition un élément de codage (1A, 1B, 1C, 1D, 1E) séparé, pourvu d'une partie mécanique de codage (6) et d'une partie d'assemblage (7) conçue sous la forme de manchette, destinée à assembler l'élément de codage (1A, 1B, 1C, 1D, 1E) séparé avec une surface extérieure (11, 13) du récipient (2), la partie mécanique de codage (6) étant prévue pour s'engager mécaniquement dans l'élément mécanique antagoniste (8) d'un appareil de lavage ou d'entretien (4), de telle sorte qu'un raccordement du récipient (2) sur un dispositif de transport (5) d'un appareil de lavage ou d'entretien (4) médical ou dentaire et un transport de l'agent de lavage ou d'entretien hors du récipient (2) ne soient possibles que lorsque la partie mécanique de codage (6) arrive en engagement avec un élément mécanique antagoniste (8) de l'appareil de lavage ou d'entretien (4) associé à la partie mécanique de codage (6),
- assembler l'élément de codage (1A, 1B, 1C, 1D, 1E) avec le récipient (2) via la partie d'assemblage (7), de telle sorte que la partie d'assemblage (7) conçue sous la forme de manchette enserre ou entoure le goulot de récipient (9) et que le goulot de récipient (9) soit logé dans un orifice (33) de la manchette de telle sorte que le goulot de récipient (9) traverse la partie d'assemblage (7), de sorte que la partie mécanique de codage (6) s'étende à la parallèle du goulot de récipient (9) et
- remplir le récipient (2) avec un agent de lavage ou d'entretien pour un appareil de lavage ou d'entretien (4) médical ou dentaire, avant ou après l'assemblage de l'élément de codage (1A, 1B, 1C, 1D, 1E) avec le récipient (2).
